(19) 

**Europäisches Patentamt**
**European Patent Office**
**Office européen des brevets**

(11) **EP 4 663 608 A1**

(12) **EUROPEAN PATENT APPLICATION**

(43) Date of publication:
**17.12.2025 Bulletin 2025/51**

(21) Application number: **24182323.6**

(22) Date of filing: **14.06.2024**

(51) International Patent Classification (IPC):
**C01G 53/04** $^{(2025.01)}$

(52) Cooperative Patent Classification (CPC):
**C01G 53/04; C01P 2004/84**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Umicore Battery Materials Finland Oy 67900 Kokkola (FI)**

(72) Inventors:
- **NIITTYKOSKI, Janne**
  **67900 Kokkola (FI)**
- **HASSINEN, Ville**
  **67900 Kokkola (FI)**
- **VEHKAMÄKI, Ville**
  **67900 Kokkola (FI)**

(74) Representative: **Umicore RDI Patent Department Watertorenstraat 33 2250 Olen (BE)**

(54) **METHOD FOR PREPARING METAL-BEARING HYDROXIDE PARTICULATE MATERIAL**

(57) A method for preparing a metal-bearing M'-hydroxide particulate material, the method comprising the steps of:

(a) determining a target value (D') for a median particle diameter D50 of the material to be prepared, preferably the D' being in the range of 3-20 $\mu$m ;

(b) combining, during a time period (T1-T2), streams of an aqueous solution ($\beta_c$) containing salts of metals $M_c$' and an aqueous solution ($\omega$) containing an alkali metal hydroxide in a stirred tank reactor at a pH of 10.5-12.5, determined at 20 °C, thereby increasing the sizes of particles comprising $M_c$'-hydroxide in a slurry thus formed;

(c) continuing step (b) until the D50 of the particles reaches approximately a value of $D_c$, wherein the amount of metals $M_c$' provided by the flow of solution ($\beta_c$) during the period (T1-T2) is $\theta_c$, wherein $D_c = \sqrt[3]{(1-\varepsilon)} * D'$ , wherein $\varepsilon$ is a predetermined value selected from the range of 0.01-0.9;

(d) providing at least a fraction $S_c$ of the slurry obtained in step (c) either to the same or to a different stirred tank reactor, wherein $0 < S_c \leq 1$;

(e) combining the fraction $S_c$ of the slurry with streams of an aqueous solution ($\beta_s$) containing salts of metals $M_s$' and the solution ($\omega$) in the reactor at a pH of 10.5-12.5, determined at 20 °C, thereby forming a layer comprising $M_s$'-hydroxide on the particles comprising $M_c$'-hydroxide of the slurry; and

(f) continuing step (e) until the amount of metals $M_s$' combined in step (e) reaches a value of $\theta_s$, which

$$\theta_s = \left(\frac{1}{1-\varepsilon} - 1\right) * \theta_c ,$$

wherein the $M_c$'=$Ni_{1-xc-yc-zc}Mn_{xc}Co_{yc}A_{zc}$ with $0 \leq xc \leq 0.85$, $0 \leq yc \leq 0.35$, $0 \leq zc < 0.1$ and $0.15 \leq 1-xc-yc-zc \leq 1$, and wherein the $M_s$'=$Ni_{1-xs-ys-zs}Mn_{xs}Co_{ys}A_{zs}$ with $0 \leq xs \leq 0.85$, $0.05 \leq ys \leq 1$, $0 \leq zs < 0.1$ and $0 \leq 1-xs-ys-zs \leq 0.95$.

**FIG. 1** _100_

(a) Determining of a target D50 of the particulate material (D') to be prepared

(b) Combining of core raw material aqueous solutions and Maintaining the precipitation conditions

(c) Providing growth of the core portion until Equation (1) is satisfied

S1

(d) Providing a fraction Sc of the slurry prepared in S1, which 0<Sc≤1

(e) Maintaining the precipitation conditions and Combining of shell raw material aqueous solutions

(f) Providing growth of the shell portion until Equation 2 is satisfied

S2

**Description**

**TECHNICAL FIELD**

In general, the present invention relates to the preparation of a metal-containing hydroxide or oxyhydroxide particulate material, also referred to, for example, as precursor material and pCAM, suitable for the preparation of cathode active material therefrom. In particular, but not exclusively, the present invention relates to methods for preparing said precursor materials comprising core-shell particles in which at least one metal content varies between the core and shell portions of the particles.

**BACKGROUND**

Lithium-ion secondary batteries typically include a negative electrode (anode), an electrolyte, and a positive electrode (cathode) containing a lithium transition metal oxide as an active material capable of incorporating and desorbing lithium. Lithium-transition metal oxides are typically prepared from transition metal hydroxides, oxides or oxyhydroxides, which in turn are typically prepared in co-precipitation processes that involve combining a metal salt solution and an alkali solution with the possible presence of a complexing agent.

In order to obtain a lithium-ion secondary battery with excellent energy density, the active material of the positive electrode must have a high charging and discharging capacity. For example, a lithium-nickel composite oxide has a lower electrochemical potential than a lithium-cobalt composite oxide and increased transition metal valence changes that contribute to charging and discharging, thus allowing the capacity of the secondary battery to be increased, but it is inferior to a lithium-cobalt composite oxide or a lithium-nickel-cobalt-manganese composite oxide in terms of thermal stability. Therefore, various techniques have been proposed in the art to improve battery characteristics by having different transition metal compositions of the particles constituting a lithium-metal composite oxide or a precursor thereof on the surface and inside the particles, i.e., a core-shell structure.

Despite intensive research into the development of improved precipitation methods for the production of pCAMs with a core-shell structure, there are still challenges in achieving a desired total metal composition and a controlled change in the metal composition within the precipitated particle structure. For example, it has remained a challenge to repeat a precipitation resulting in a desired target total metal ratio for the material while keeping the molar ratios of the metals between the core and shell portions of the particles constant.

In light of the above, there is a need for further improvements in the manufacturing process of cathode active material precursors.

**SUMMARY OF THE INVENTION**

An object of the present invention is to provide improved methods for preparing particulate pCAM material precursors in which the metal composition is different on the surface of and inside the particles.

The object is achieved by providing a method for preparing a metal-bearing M'-hydroxide particulate material according to claim 1. The method comprises the steps of:

(a) determining a target value (D') for a median particle diameter D50 of the material to be prepared, preferably the D' being in the range of 3-20 $\mu$m;
(b) combining, during a time period (T1-T2), streams of an aqueous solution ($\beta_c$) containing salts of metals $M_c$' and an aqueous solution ($\omega$) containing an alkali metal hydroxide in a stirred tank reactor at a pH of 10.5-12.5, determined at 20 °C, thereby increasing the sizes of particles comprising $M_c$'-hydroxide in a slurry thus formed;
(c) continuing step (b) until the D50 of the particles reaches approximately a value of $D_c$, wherein the amount of metals $M_c$' provided by the flow of solution ($\beta_c$) during the period (T1-T2) is $\theta_c$, wherein $D_c = \sqrt[3]{(1-\varepsilon)} * D'$, wherein $\varepsilon$ is a predetermined value selected from the range of 0.01-0.9;
(d) providing at least a fraction $S_c$ of the slurry obtained in step (c) either to the same or to a different stirred tank reactor, wherein $0 < S_c \leq 1$;
(e) combining the fraction $S_c$ of the slurry with streams of an aqueous solution ($\beta_s$) containing salts of metals $M_s$' and the solution ($\omega$) in the reactor at a pH of 10.5-12.5, determined at 20 °C, thereby forming a layer comprising $M$,'-hydroxide on the particles comprising $M_c$'-hydroxide of the slurry; and
(f) continuing step (e) until the amount of metals $M_s$' combined in step (e) reaches a value of $\theta_s$, which

$$\theta_s = \left(\frac{1}{1-\varepsilon} - 1\right) * \theta_c ,$$

wherein the $M_c'=Ni_{1-xc-yc-zc}Mn_{xc}Co_{yc}A_{zc}$ with $0 \leq xc \leq 0.85$, $0 \leq yc \leq 0.35$, $0 \leq zc < 0.1$ and $0.15 \leq 1-xc-yc-zc \leq 1$, and
wherein the $M_s'=Ni_{1-xs-ys-zs}Mn_{xs}Co_{ys}A_{zs}$ with $0 \leq xs \leq 0.85$, $0.05 \leq ys \leq 1$, $0 \leq zs < 0.1$ and $0 \leq 1-xs-ys-zs \leq 0.95$.

Indeed, it is observed that a predetermined overall, i.e., total, metal composition for the material is obtained by the method, while the core and the shell portions of the particles have their own predetermined molar ratios of metals obtained by varying the metal compositions and amounts of $M_c'$ and $M_s'$ in steps (b) and (d), as illustrated in Examples 1 to 3.

It is also observed that a predetermined total metal composition is obtained by the method in which the metal composition of the prepared particles is different on the surface of and inside the particles and in which there is metal composition gradients within the core portion but the molar ratios of metals of the shell and the core are still constant and their predetermined ratios are obtained, as illustrated in Example 3.

Various embodiments of the present invention are disclosed in the claims and the description. The embodiments and examples recited in the claims and description are freely combinable with one another, unless otherwise expressly stated. Throughout the disclosure, where numerical ranges are given, the ranges include endpoint values unless otherwise expressly stated.

Embodiments of the invention will be explained in greater detail below with reference to the figures.

## BRIEF DESCRIPTION OF THE FIGURES

By means of further guidance, the following figures are included to better appreciate the teaching of the present invention, wherein:

- Figure 1 is a diagram illustration of an embodiment of the method for preparing metal-bearing M'-hydroxide particulate material;
- Figure 2 is a schematic drawing of a core-shell particle;
- Figure 3 is a collection of cross-sectional SEM and SEM-EDS images of the particles obtained in Example 1; and

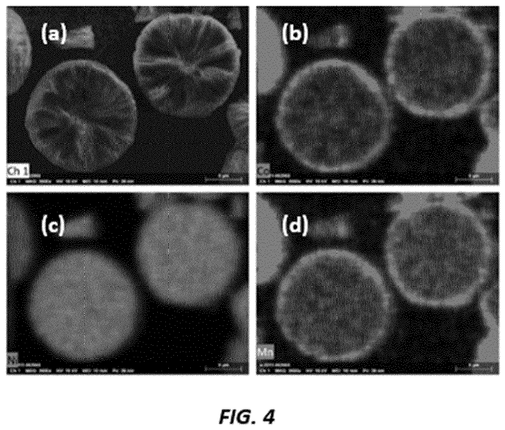

- Figure 4 is a collection of cross-sectional SEM and SEM-EDS images of the particles obtained in Example 2.

## DETAILED DESCRIPTION OF THE INVENTION

In the following detailed description, preferred embodiments are described in detail to enable the invention to be practiced. Although the invention is described with reference to these specific preferred embodiments, it will be understood that the invention is not limited to these preferred embodiments. To the contrary, the invention includes numerous alternatives, modifications, and equivalents, as will become apparent from consideration of the following detailed description and the accompanying drawings.

The term "comprising", as used herein and in the claims, should not be interpreted as being restricted to the means listed thereafter; it does not exclude other elements or steps. It needs to be interpreted as specifying the presence of the stated features, integers, steps, or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

In the present disclosure all given pH values refer to values which are measured at a temperature of 20 °C, unless otherwise stated.

In the present disclosure, the prepared hydroxide particles/particulate compounds may include, in addition to a pure hydroxide phase, an oxyhydroxide phase or a combination thereof. Which phase, either a hydroxide or an oxyhydroxide phase or the combination thereof, is formed in the process depends, in particular, on the oxidation reaction conditions, as will be appreciated by those skilled in the art.

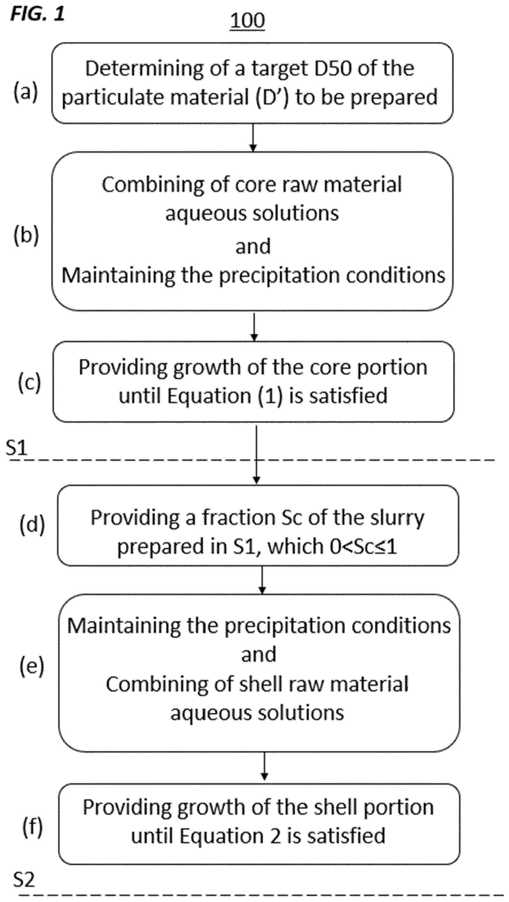

Fig. 1 is a schematic illustration of an embodiment 100 of the method for preparing metal-bearing M'-hydroxide particulate material for cathode active material for secondary batteries. The embodiment 100 comprises two precipitation process stages, having a first precipitation stage S1 (core portion formation) and a second precipitation stage S2 (shell portion formation) for the particulate material.

In step (a) of S1, a target value for a median particle diameter D50 of the material to be prepared, D', is determined. It can be determined, for example, in the range from 3 to 20 $\mu$m.

With respect to other determinations of the material to be prepared, such as a desired target total metal ratio for the material, metal compositions and ratios of the shell and core portions, and what is the ratio of metals between the shell and core portions of the particle, i.e., a shell-to-core ratio, $\varepsilon$, are also advantageously determined prior to starting the next step.

In step (b) of S1, starting at time T1, aqueous solutions of core raw materials are combined in a stirred tank reactor during a time period T1-T2. This is done by feeding and mixing an aqueous solution $\beta_c$ containing water-soluble salts of metals $M_c$' and an aqueous solution $\omega$ containing an alkali metal hydroxide in a stirred tank reactor or the like at a pH of from 10.5 to 12.5, determined at 20°C, and thus precipitating to form a slurry containing the core portion comprising $M_c$'-hydroxide. The metals $M_c$' in the solution $\beta_c$ consist of a group of metals comprising at least nickel and optionally at least one of manganese, cobalt, or an element $A_{zc}$, $A_{zc}$ being either one or more of Ba, Ca, Ce, Cr, La, Mg, Mo, Nb, Sr, Ti, Y, V, W, Zn and Al. The preparation of the solution $\beta_c$ and the appropriate metal compositions $M_c$' are described later in the disclosure.

Step (b1), which is not shown in the figure, may be preceded by step (b), in which step (b1) an alkaline solution, such as the solution $\omega$, and possibly water and/or another solvent are first fed and mixed in the reactor and the pH is adjusted to the range of 10.5 to 12.5 to provide a start-up solution, i.e. a starting solution. Additionally or alternatively, step (b1) may further comprise feeding and mixing a complexing agent to provide a starting solution. The complexing agent may be provided in the form of an aqueous solution comprising a source of the complexing agent, such as ammonium ion.

The precipitation initiated in step (b) of S1 is terminated in step (c) when the D50 value of the precipitated particles reaches a value of $D_c$, which is calculated by the following equation 1:

$$D_c = \sqrt[3]{(1-\varepsilon)} * D' \qquad \text{(Equation 1),}$$

wherein $\varepsilon$ is a shell-to-core ratio, having a predetermined value selected from the range of 0.01 to 0.9. It is the ratio of the amount of metals in the shell portion to the amount of metals in the core portion of the particles to be prepared.

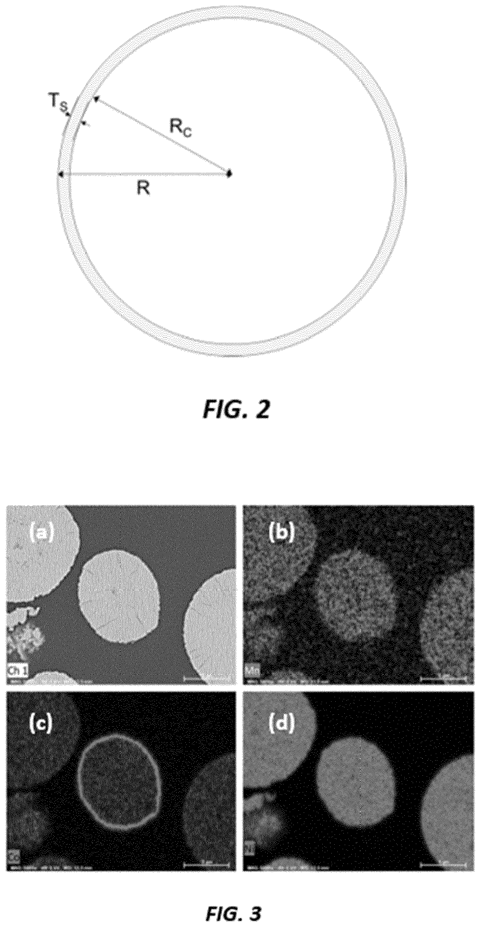

In addition, the value of $\varepsilon$ is related to the thickness of the shell, $T_s$, produced in the subsequent precipitation stage S2 described later, although in the method the thickness of the shell is directly controlled, but the amount of metals precipitated to the shell portion. $T_s$ can be defined as the difference between the average radius of a particle, R, and the average radius of the core portion, $R_C$, as shown in Fig. 2. Ts can advantageously be at least R×0.001 (0.1% of R) and at most R×0.75 (75% of R) for a given $\varepsilon$ value, depending on the target diameter value D'.

As will be appreciated by those skilled in the art, determining the value of $\varepsilon$ depends on how much of the total amount of metals is desired to be located in the shell portion relative to the amount of metals in the core portion. It can be calculated by dividing the desired percentage of the amount of metals in the shell portion by the desired percentage of the amount of metals in the core portion. Advantageously, the desired percentages of the core portion and the shell portion are equal to 100%.

The $\varepsilon$ value, together with the metal compositions in an aqueous solution $\beta_c$ used in S1 and an aqueous solution $\beta_s$ used in S2 the amounts of metals supplied, determines the total metal ratios of the particulate material produced by the method.

In an embodiment, the $\varepsilon$ being at most 0.8 or 0.7 or 0.6 or 0.5 or 0.4.

What the value of $\varepsilon$ should be depends on the application, such as, what is the intended D' size and how much of the total/overall metals it is intended to be in the core and shell portions, what the total/overall metal composition of the particulate material being prepared is, and what the metal compositions of the core and shell portions are.

The D50 value can be measured using a particle size analyzer such as a laser diffraction analyzer. The D50 value, also known as the particle size distribution or the median value of the particle size distribution, is the value of the particle diameter at 50% in the cumulative distribution.

After the streams of the core raw materials, i.e., the streams of the aqueous solution $\beta_c$ containing water-soluble salts of the metals $M_c$' and the aqueous solution $\Theta$ containing an alkali metal hydroxide, are stopped in step (c), at time T2, the amount $\theta_c$ of the metals $M_c$' provided by the flow of the solution $\beta c$ is determined or calculated. The value of $\theta_c$ is to be used in Equation 2 in the shell precipitation stage, S2, described below, to obtain the desired metal molar ratios between the core portion and the shell portion.

The amount of metals supplied $\theta_c$ in the precipitation stage S1 can be determined in many ways, and the present invention is not limited to any particular method of determination the amount of metals, and alternative methods not disclosed herein may also be used. For example, mass flow meters can be used to determine the amounts of metals supplied. For example, if the mixed $MeSO_4$ solution, i.e. the aqueous solution $\beta_c$ in S1 or the aqueous solution $\beta_s$ in the precipitation stage S2, is produced in a mixer on the fly before the mixed solution is fed, i.e., delivered or supplied, to the reactor, separate mass flow meters can be installed on each metal feed line to determine the total amount of metal fed. Alternatively, if the mixed $MeSO_4$ solution is first provided in a vessel/container, a mass flow meter can be placed between the vessel and the reactor to determine the total amount of metals delivered.

Another way to determine the total amount of metal delivered is to calculate the amount of metal solution based on knowledge of the RPMs used and the pumping efficiency for the RPMs used by the solution delivery pump, which can be estimated by a person skilled in the art.

Another way to determine the total amount of metals delivered is to weigh the vessel containing the mixed $MeSO_4$ solution to be delivered to the reactor and calculate the total amount of metals delivered based on the weight reduction of the vessel and the density information of the solution.

In step (d), at the beginning of the second precipitation S2, at least a fraction of $S_c$ of the slurry obtained from step (c) is provided to a stirred tank reactor or the like, which $S_c$ may be in the range of $0<S_c\leq1$ of the solids content of the slurry obtained from S1.

The reactor used in step (d) can be the same as that used in S1. When the reactor used in S2 is the same as that used in S1, the precipitation reaction is advantageously easy to restart in the step (e), since as the reaction conditions, such as pH and/or temperature, are already optimally adjusted or only minor adjustments to the conditions are required, making the overall process efficient.

If the same reactor is used in S2 as that in S1, the $S_c$ can be 1, which means that all the solids prepared in S1 can remain un the reactor and be used as the core portion material on which the shell portion is provided in S2.

Alternatively, the reactor used in S2 can be different from the reactor used in S1. In this case, the solids fraction of the slurry prepared in stage S1 is advantageously chosen between $0<S_c\leq1$.

If the $S_c$ is provided in a different reactor than that used in the S1, step (e) may be preceded by step (e1), which is not shown in Fig. 1. Step (e1) comprises providing a starting solution, which step may be similar to or different from step (b1) described above.

In step (e) of S2 the $S_c$ of the slurry provided in the reactor is combined with shell raw material aqueous solutions in the reactor at a pH of 10.5-12.5, determined at 20 °C. The shell raw material aqueous solutions comprise an aqueous solution $\beta_s$ containing salts of metals $M_s'$ and an aqueous solution $\theta$ containing an alkali metal hydroxide, which solution $\theta$ may be the same or different from that as used in S1. The metals $M_s'$ in the solution $\beta_s$ consist of a group of metals comprising at least nickel and at least one of manganese or cobalt and optionally an element $A_{zs}$, $A_{zs}$ being either one or more of Ba, Ca, Ce, Cr, La, Mg, Mo, Nb, Sr, Ti, Y, V, W, Zn, and Al. The solutions βs used in S2 and $\beta_c$ used in S1 are different, meaning that the metal composition of the solution $\beta_s$ is different from the metal composition of the solution $\beta_c$ provided in S1. In some embodiments, the solution $\beta_s$ has a lower nickel content than the solution $\beta_c$. The preparation of the solution $\beta_s$ and appropriate metals $M_s'$ compositions are described later in this disclosure.

Step (e) is continued until the precipitation process of S2 is stopped at step (f) when the amount of metals $M_s'$ combined in step (e) reaches a value of $\theta_s$, which is calculated by the following equation 2:

$$\theta_s = \left(\frac{1}{1-\varepsilon} - 1\right) * \theta_c \qquad \text{(Equation 2)},$$

wherein $\varepsilon$ is the predetermined shell-to-core ratio and is also used in step (c) of S1 in Equation (1), and $\theta_c$ is the amount of metals Mc' provided by the stream of solution ($\beta_c$) during the period (T1-T2).

Once the Equation 2 is satisfied and the process being stopped at step (f) of S2, the reaction slurry can be removed from the reactor, e.g., via a bottom valve of the reactor, and delivered to a post-processing such as washing and filtering, followed by drying to obtain a powdered core-shell pCAM product.

In an embodiment, the method further comprises, subsequent of step (f), recovering the particles from the slurry.

In an embodiment, at least one of the following two holds:

- in step (b) a stream of an aqueous solution ($\lambda$) containing complexing agent, such as ammonia, is combined with the streams of the aqueous solution ($\beta_c$) and the aqueous solution ($\omega$); or
- in step (e) a stream of an aqueous solution ($\lambda$) containing complexing agent, such as ammonia, is combined with the streams of the aqueous solution ($\beta_s$) and the aqueous solution ($\omega$).

In an embodiment, the molar ratio of the complexing agent to metals $M_c'$ in step (b) is between a range of 0.1-1.0.

In an embodiment, the molar ratio of the complexing agent to metals $M_s'$ in step (e) is between a range of 0.1-1.0.

In an embodiment, the molar ratio of the complexing agent to metals $M_s'$ in step (e) is at least 0.05 higher than the molar ratio of the complexing agent to metals $M_c'$ in step (b). In some embodiments, especially when S1 and S2 are performed in the same reactor and/or the metal composition of the supplied aqueous solution changes significantly, such as from Ni rich to Co rich, when changing from S1 to S2, this makes it possible to ensure that the metals supplied to the reactor in the form of the solution $\beta_s$ grow the existing particles having the core portions generated in S1 and/or the nucleation of new, separate particles to the slurry is suppressed.

In an embodiment, the complexing agent is ammonia and/or a compound/agent capable of acting as an ammonium ion donor.

Examples of complexing agents include ammonia and organic acids or their alkali or ammonium salts, wherein the organic acid bears at least two functional groups per molecule and at least one of the functional groups is a carboxylate group. Examples of organic acids bearing two identical functional groups are adipic acid, oxalic acid, succinic acid and glutaric acid. An example of an organic acid bearing three identical functional groups is citric acid. In one embodiment, the organic acid is selected from malic acid, tartaric acid, citric acid, and glycine.

In the embodiments wherein ammonia and/or a compound/agent capable of acting as an ammonium ion donor is used, the ammonium ion concentration in the reaction mixture is advantageously maintained within a range of preferably 3 g/L or more and 25 g/L or less, more preferably 5 g/L or more and 20 g/L or less. Ammonium ions function as a complexing agent in the reaction mixture. When the ammonium ion concentration fluctuates during the precipitation reaction, the solubility of metal ions fluctuates and metal composite hydroxide particles with stable particle size distribution are not formed. For this reason, it is preferable to control the fluctuation range of the ammonium ion concentration in a certain range during the first precipitation stage S1 (core portion formation) and the second precipitation stage S2 (shell portion formation). In particular, the fluctuation range is preferably controlled to a fluctuation range of $\pm 5$ g/L. The aqueous solution containing an ammonium ion supplier is also not particularly limited and, for example, ammonia water or an aqueous solution of ammonium sulfate, ammonium chloride, ammonium carbonate or ammonium fluoride can be used. When ammonia water is used as the ammonium ion supplier, the concentration thereof is set to preferably 20 to 30 wt.% or less, more preferably 22 to 28 wt.% by weight or less. When the concentration of the ammonia water is within the above range, the loss of ammonia due to evaporation and the like can be suppressed to a minimum, thereby improving the production efficiency.

Examples of complexing agents include ammonia and organic acids or their alkali or ammonium salts, wherein the organic acid bears at least two functional groups per molecule and at least one of the functional groups is a carboxylate group. Examples of organic acids bearing two identical functional groups are adipic acid, oxalic acid, succinic acid and glutaric acid. An example of an organic acid bearing three identical functional groups is citric acid. In one embodiment, the organic acid is selected from malic acid, tartaric acid, citric acid, and glycine.

All solutions supplied, i.e., delivered, to the reactor in the method can be supplied by a pump capable of controlling the flow rate, such as a metering pump, while being sufficiently stirred.

It is possible to provide so called seed particles prior to step (b) to the reactor, e.g., to the starting solution. In an embodiment, at the beginning of step (b) or prior to step (b), preferably before T1, a starting slurry is provided to the stirred tank reactor, the starting slurry comprising particles comprising metal $M_k$'-bearing hydroxide, wherein $M_k$'=$Ni_{1-xk-yk-zk}Mn_{xk}Co_{yk}A_{zk}$ with $0 \leq xk \leq 0.85$, $0 \leq yk \leq 0.35$, $0 \leq zk < 0.1$ and $0.25 \leq 1-xk-yk-zk \leq 1$.

In an embodiment, 1-xk-yk-zk=1 or $M_k$'= $M_c$'. The former means that the particles (i.e., seeds or seed particles) provided in the starting slurry have the same metal composition as the metals $M_c$' of the solution $\beta_c$. The latter means that the seed particles contain only nickel.

In an embodiment the D50 of the particles, i.e., seed particles, of the starting slurry has a value $D_k$ which is less than $D_c$, preferably $D_k$ is in the range of 0.7-10 $\mu$m, more preferably $D_k$ is in the range of 1.0-6 $\mu$m.

In those embodiments where the seed particles are added to the starting solution in S1, the $\theta_c$, used in Equation 2, is a sum of the amount of metals $M_c$', combined in step (b), and the amount of metals $M_k$', added to the starting slurry.

The amounts of metals in the seed particles added to the starting slurry can be determined, for example, from the solids content and the volume of the of the slurry containing the seed slurry added to the starting solution. The solids content may be determined by any suitable method, such as, but not limited to, a method based on filtration or centrifugation, which provides the content of the slurry particles; dissolved compounds may be neglected.

The amounts of metals in the method can be expressed in moles, for example, or in mass, in units of kg. Whatever unit is used for the amount of metals in the equations, it is important to use the same unit in all steps of the method to maintain the desired shell-to-core ratio.

In an embodiment, the $\theta_c$ and $\theta_s$ are expressed as weight in units of kg or g. In another embodiment, the $\theta_c$ and the $\theta_s$ are expressed in moles.

The reaction temperature, i.e., the reaction slurry within the reaction processes of S1 and S2, is controlled to be within a range of preferably 20 °C or more, more preferably 20 °C or more and 90°C or less throughout the first and second crystallization processes. When the reaction temperature is less than 20 °C, the solubility of the reaction slurry/mother liqueur decreases, so that nucleation is likely to occur, and it is difficult to control the average particle size and particle size distribution of the obtained particles. The upper limit of the reaction temperature is not particularly limited, but volatilization of ammonia may be promoted and advantageously taken into account when the reaction temperature exceeds a value of 60-80 °C, in the cases where the aqueous solution $\omega$ containing ammonia and/or an agent/compound capable of acting as an ammonium ion donor, is combined with the solutions $\beta_c/\beta_s$ and the solutions $\omega$.

The reaction atmosphere in the first precipitation stage S1 (core portion formation) and the second precipitation stage S2 (shell portion formation) is not particularly limited but is preferably controlled to a non-oxidizing atmosphere. In some embodiments, the reaction atmosphere can be controlled to a mixed atmosphere of oxygen and inert gas such that the oxygen concentration in the reaction atmosphere is, for example, 5 vol% or less, preferably 2 vol% or less. This makes it possible, depending on the metal composition of the supplied solution $\beta_c/\beta_s$, to influence to the growth and structure of the generated particles while suppressing unnecessary oxidation.

The aqueous solution $\omega$ containing an alkali metal hydroxide is not particularly limited and general aqueous solutions of alkali metal hydroxides such as sodium hydroxide and potassium hydroxide can be used. The alkali metal hydroxide can be added directly to the reaction mixture and combined with the solution $\beta_c/\beta_s$ but is preferably added as an aqueous solution from the point of view of ease of pH control. In this case, the concentration of the aqueous solution of alkali metal hydroxide is preferably 20 wt.% to 50 wt.%, more preferably 20 to 30 wt.%. By controlling the concentration of the aqueous solution $\omega$ to such a range, it is possible to prevent the pH from increasing locally at the point of addition while suppressing the amount of solvent, typically water, supplied to the reactor, and thus to easily control the particle size distribution of the prepared material.

The aqueous solutions $\beta_c$ and $\beta_s$ are each prepared by dissolving compounds containing transition metals (Ni, Co, Mn, and optionally $A_{zc}/A_{zc}$). In the precipitation process, the ratio of metal elements in the solutions containing the transition metals is approximately the same as the composition ratio in the obtained hydroxide material. For this reason, the composition of each metal element in the aqueous solutions $\beta_c$ and $\beta_s$ used can be appropriately adjusted according to the intended composition of metal-bearing hydroxide material. The compounds of transition metal elements (Ni, Co, Mn, and optionally $A_{zc}/A_{zc}$) used in the preparation of the aqueous solutions $\beta_c$ and $\beta_s$ are not particularly limited but it is preferable to use water-soluble nitrates, sulfates, and hydrochlorides due to ease of handling and it is particularly preferable to suitably use sulfates due to cost and of preventing mixing of halogen. The concentration of each of the aqueous solutions $\beta_c$ and $\beta_s$ is preferably 1 mol/L or more and 2.6 mol/L or less, more preferably 1.5 mol/L or more and 2.2 mol/L or less as the sum of metal compounds.

In the method the metal composition of the aqueous solution $\beta_c$ for the core portion preparation in S1 is defined by the formula $M_c' = Ni_{1-xc-yc-zc}Mn_{xc}Co_{yc}A_{zc}$, where $0 \leq xc \leq 0.85$, $0 \leq yc \leq 0.35$, $0 \leq zc < 0.1$ and $0.15 \leq 1-xc-yc-zc \leq 1$. Respectively, the metal composition of the aqueous solution $\beta_s$ for the shell portion preparation in S2 is defined by the formula $M_s' = Ni_{1-xs-ys-zs}Mn_{xs}Co_{ys}A_{zs}$, where $0 \leq xs \leq 0.85$, $0.05 \leq ys \leq 1$, $0 \leq zs < 0.1$ and $0 \leq 1-xs-ys-zs \leq 0.95$.

In an embodiment, $0.015 \leq xs \leq 0.25$, preferably $0.025 \leq xs \leq 0.15$, more preferably $0.035 \leq xs \leq 0.1$.

In an embodiment, at least one of the following three holds:

- $1-xc-yc-zc > 1-xs-ys-zs$;
- $xc \leq 0.3$, $yc \leq 0.3$ and $1-xc-yc-zc \geq 0.60$; and
- $xs \leq 0.35$, $0.3 \leq ys \leq 1$, $0 \leq zs < 0.1$ and $0 \leq 1-xs-ys-zs \leq 0.35$.

In an embodiment, one of the following two holds:

- $xc \leq 0.2$, $yc \leq 0.2$ and $1-xc-yc-zc \geq 0.6$; or
- $xc \geq 0.55$, $yc \leq 0.2$ and $0.2 \leq 1-xc-yc-zc \leq 0.45$.

In an embodiment, one or more of the following holds: $xc \neq xs$, $yc \neq ys$, and $zc \neq zs$.

In an embodiment, $1-xs-ys-zs=0$.

In an embodiment, each of $A_{zc}$, $A_{zs}$ or $A_{zk}$ is either one or more of Ba, Ca, Ce, Cr, La, Mg, Mo, Nb, Sr, Ti, Y, V, W, Zn, and Al.

In an embodiment, either in the first precipitation stage S1 (core portion formation) or in the second precipitation stage S2 (shell portion formation) or in both stages, the metal composition of the aqueous solution $\beta_c/\beta_s$ changes either continuously or discontinuously during the precipitation stage. This means that in this embodiment at least one of two precipitation stages S1 and S2 comprises feeding the aqueous solution containing salts of metals $M_c'/M_s'$ in a way that a metal composition gradient is formed to the precipitated particle.

In the first precipitation stage S1 (core portion formation) and the second precipitation stage S2 (shell portion formation), it is preferable to use a batch precipitation reactor, such as a continuous stirred tank reactor (CSTR), which does not collect the precipitated product until the precipitation reaction is completed. By using such a crystallization apparatus, a metal composite hydroxide having a uniform composition/structure and a uniform particle size distribution can be obtained.

## ANALYSIS METHODS USED IN THE EXAMPLES

The following analysis methods are used in the Examples:

### A) Ph analysis

pH value of a sample was measured by a 780 Metrohm meter calibrated with pH 7 and pH 13 standards. The sample was cooled to 20°C and the pH was measured from the sample by lowering the pH electrode into the sample and waiting for the pH reading to be leveled.

**B) NH3(aq) concentration analysis**

The NH3(aq) concentration was measured from a reactor sample by end point titration using an instrument of Metrohm 848 Titrino Plus. One milliliter of sample solution was added to a titration vessel. 30-40 ml of deionized water and 1 ml of 1M NaOH were added. Sample was titrated to the end point by 0.1M HCl.

**C) Particle size distribution (PSD) analysis**

The PSD is measured using a Malvern Mastersizer 3000 with Hydro MV wet dispersion accessory after dispersing examples as described herein below of positive electrode active material powders in an aqueous medium. To improve the dispersion of the positive electrode active material powder examples, sufficient ultrasonic irradiation and stirring is applied, and an appropriate surfactant is introduced. D50 is defined as the particle size at 50% of the cumulative volume % distribution.

**D) Inductively coupled plasma - optical emission analysis (ICP-OES) analysis**

The positive electrode active material examples as described herein below are measured by the Inductively Coupled Plasma - Optical Emission Spectrometry (ICP-OES) method using an Agilent ICP 720-OES. 1 gram of a powder sample of each example is dissolved into 50 mL high purity hydrochloric acid in an Erlenmeyer flask. The flask is covered by a watch glass and heated on a hot plate at 380°C until complete dissolution of the sample. After being cooled to room temperature, the solution and the rinsing water of Erlenmeyer flask are transferred to a 250 mL volumetric flask. Afterwards, the volumetric flask is filled with DI water up to the 250 mL mark, followed by complete homogenization. An appropriate amount of solution is taken out by pipette and transferred into a 250 mL volumetric flask for the 2nd dilution, where the volumetric flask is filled with internal standard and 10% hydrochloric acid up to the 250 mL mark and then homogenized. Finally, this solution is used for ICP-OES measurement. The contents/compositions of Ni, Mn, and Co are expressed as mol% of the total of these contents.

**EXAMPLES**

The present invention is further illustrated in the following examples:

**Example 1**

A core-shell sample EX1 having a total metal ratio of $Ni_{0.855}Mn_{0.045}Co_{0.100}$ and a shell-to-core ratio, $\varepsilon$, of 2:98 (i.e., $\varepsilon \approx 0.02041$), and a target median particle size D50 of 12.2 $\mu$m, i.e., D'=12.2 $\mu$m, was prepared by the following multi-step process:
The precipitation process steps of Example 1 were performed in a continuous stirred tank reactor (CSTR) with a liquid volume of 8 m3, equipped with a turbine for stirring and a concentrator, i.e., a filter device, for withdrawing the mother liquor from the reactor. Two solutions containing nickel, manganese, and cobalt sulfate, NiSO4, MnSO4 and CoSO4, respectively, with a total metal concentration of 120 g/l, were prepared to obtain a mixed MeSO4 solution, i.e., an aqueous solution containing salts of metals, where Me is composed of Ni, Mn, and Co. The mixed MeSO4 solutions were prepared by feeding separate NiSO4, MnSO4, and CoSO4 solutions with respective ratios through a static mixer. The first MeSO4 solution used in S1 had a Ni:Mn:Co molar ratio of 0.872:0.045:0.083, and the second MeSO4 solution used in S2 had a molar ratio of 0.0:4.5:95.5. During the precipitations, the dosing of each of the three solutions of NiSO4, MnSO4, and CoSO4 was monitored by the mass flow meters installed in the NiSO4, MnSO4, and CoSO4 feed lines to determine the total amount of metals delivered to the reactor. A solution of 220 g/L NaOH and a solution of 210 g/L ammonia were used in both S1 and S2, and nitrogen gas was supplied to the reactor to prevent oxidation during precipitation. In addition, to increase the solids content during precipitation, a portion of the mother liquor obtained was occasionally withdrawn from the reactor through a filter device located inside the reactor.
S1 precipitation of the core particles: A shell-to-core ratio $\varepsilon$ was determined to be 0.02041, which means that the total metal composition of sample EX1 should be 98% from the core portion and 2% from the shell portion, respectively. The core portion was prepared using the first MeSO4 solution with the molar ratio of Ni:Mn:Co of 0.872:0.045:0.083. First the reactor was filled half with DI water, followed by adding NaOH and ammonia solutions such that a starting solution having 7 g/L of ammonia and a pH value of 12.4, defined at 20 °C, was obtained. The temperature of the reactor was adjusted to 65 °C. Then, different reagents, i.e., the first MeSO4 solution, NaOH solution and ammonia solution, were pumped simultaneously into the reactor at different injection points, maintaining an average residence time of 3 hours, keeping the ammonia to metal ratio of the feed at 0.5-0.6 and maintaining the pH of the slurry around 11.7 with the NaOH solution. The dosing of the reagents was terminated when the particles reached a D50 value satisfying Equation 1 described above, i.e., when the D50 reached a value of

$$D_c = \sqrt[3]{(1-\varepsilon)} * D' = D_c = \sqrt[3]{(1-0.02041)} * 12.2' \ \mu m \approx 12.1$$

$\mu m$. The total volume of the first MeSO4 solution dosed during S1 was 34.58 m³, from which the total amount of metal delivered during S1, $\theta_c$, was calculated to be 4149.12 kg.

S2-precipitation of the shell on top of the core particles: The first MeSO4 solution dosed into the reactor during S1 was switched to the second MeSO4 solution, where, at this time with the Ni:Mn:Co molar ratio of 0.00:4.5:95.5. First, the dosing of all reagents, i.e., the second metal salt solution, NaOH solution, and ammonia solution, was restarted and kept the same as during S1 except that the ammonia to metal ratio of the feed was changed to 0.6-0.7. The dosing of the reagents was stopped when the total amount of metal supplied during S2 reached a value of $\theta_s$ that satisfied the equation 2 described above with $\varepsilon = 0.02$ and $\theta_c = 4149.12$ kg, i.e., when the $\theta_s$ reached a value of

$$\theta_s = \left(\frac{1}{1-0.02} - 1\right) * 4149.12 \text{ kg} \approx 84.68 \text{ kg}$$

, corresponding to the dosing of 705.63 L of the second MeSO4 solution. A value of 12.2 $\mu m$ was measured for the D50 after S2.

After S2 the precipitated metal (oxy-)hydroxides were washed and filtered. The wet cake obtained was dried in a furnace at 120 °C under nitrogen. The final core-shell precipitated metal (oxy-)hydroxide is labeled EX1. The average metal composition of EX1 from ICP analysis was Ni:Mn:Co=85.6:4.4:10.0 (in mol%), as shown in Table 1. Fig. 3(a) shows a cross-sectional SEM of EX1 and Fig. 3(b-d) shows SEM-EDS images for Mn, Co, and Ni, respectively. The thickness of the shell can be estimated based on the process but can also be measured afterwards using advanced analytical tools such as XPS depth profiling or even TEM analysis.

**Example 2:**

A core-shell sample EX2 having a total metal ratio of Ni0.92Mn0.03Co0.05 and a shell-to-core ratio, $\varepsilon$, of 19:81 (i.e., $\varepsilon \approx 0.23457$), and a target median particle size D50 of 15.2 $\mu m$, i.e., D'=15.2 $\mu m$, was prepared by the following multi-step process:

(1a) Seed suspension preparation process: First, a starting solution was prepared by adding 10 L of DI water, 0.1 L of 55 g/L aqueous ammonia solution, and 0.1 L of 220 g/L NaOH solution to a 30 L CSTR reactor equipped with a turbine impeller. The reactor temperature was set at 55 °C and maintained throughout the process. An inert atmosphere was maintained in the reaction vessel by passing N2 gas through the reactor. Next, 130 g/L nickel sulfate solution, 220 g/L aqueous ammonia solution, and 220 g/L NaOH solution were added continuously at a feed rate of 1.7 L/h, 0.046 L/h, and 1.44 L/h, respectively. The reaction mixture was stirred at a stirring speed of 1200 rpm. The NH3(aq) concentration in the reaction mixture was kept between 2.1-3.7 g/L, and the pH of the reaction mixture was kept between 12.4-12.7 by adjusting the feeding of the aqueous ammonia solution and the feeding of the NaOH solution, respectively. The reaction was performed in a continuous mode. When the reaction reached a stable state, a reaction resultant, i.e., the aqueous slurry of Ni(OH)2 particles with a D50 of about 1.0 $\mu m$, was collected from the overflow of the reaction vessel.

The remaining steps of the precipitation process in Example 2 were performed in batch mode in a continuous stirred tank reactor (CSTR) with a liquid volume of 8.75 L, equipped with a turbine for stirring and a concentrator for withdrawing mother liquor from the reactor. Two solutions containing nickel, manganese, and cobalt sulfate, NiSO4, MnSO4, and CoSO4, respectively, with a total metal concentration of 120 g/l, were prepared to obtain a mixed MeSO4 solution, i.e., an aqueous solution containing salts of metals, where Me consists of Ni, Mn, and Co. The mixed MeSO4 solutions were prepared by feeding separate NiSO4, MnSO4, and CoSO4 solutions with respective ratios through a static mixer. The first MeSO4 solution used in (1b) seed growth process and S1 was a nickel sulfate solution, i.e., Ni:Mn:Co molar ratio of 1:0:0, and the second MeSO4 solution used in S2 had a molar ratio of 57.7:15.8:26.5. During the precipitations, the dosing of each of the three solutions of NiSO4, MnSO4, and CoSO4 was monitored by the mass flowmeters installed in the NiSO4, MnSO4, and CoSO4 feed lines to determine the total amount of metals delivered. A solution of 220 g/L NaOH and a solution of 210 g/L ammonia were used, and nitrogen gas was supplied to the reactor to prevent oxidation during precipitation. In addition, to increase the solids content during precipitation, a portion of the mother liquor obtained was occasionally withdrawn from the reactor through a filter device located inside the reactor.

(1b) Seed growth process: First, the reactor was half filled with DI water, followed by 600 mL of the seed slurry of Ni(OH)2 with a solids content of 120 g/L prepared in the previous step (1a). The temperature of the reactor was adjusted to 85 °C. NaOH and ammonia solutions were then added to obtain a starting solution with 6 g/L ammonia and a pH of 11.8, defined at 20 °C. Then, different reagents, i.e., the first MeSO4 solution, NaOH solution, and ammonia solution, were pumped simultaneously into the reactor at different injection points, keeping the ammonia-to-metal ratio of the feed at 0.65 and maintaining the pH of the slurry around 11.8-11.9 with the NaOH solution. The dosing of the reagents was stopped when the precipitated Ni(OH)2 particles reached a D50 value of 5 $\mu$m.

S1 precipitation of core particles: As mentioned above, a shell-to-core ratio $\varepsilon$ was determined to be 0.23457, which means that the total metal composition of sample EX1 is 81% from the core portion and 19% from the shell portion. The core portion was prepared by growing the Ni(OH)2 particles from the slurry prepared in the previous step (1b). First, the reactor was half filled with DI water, followed by the addition of 600 mL of the slurry of Ni(OH)2 with a solids content of 800 g/L prepared in the previous step (1b). Then NaOH and ammonia solutions were added to obtain a starting solution with 4 g/L ammonia and a pH of 11.7, defined at 20 °C. The temperature of the reactor was adjusted to 85 °C. Then, different reagents, i.e. the first MeSO4 solution, the NaOH solution and the ammonia solution, were pumped simultaneously into the reactor at different injection points, gradually increasing the ammonia-to-metal ratio so that the 6 g/L ammonia concentration increased to a value of 11.7 at the end of S1 and the pH of the slurry was kept around 11.7 with the NaOH solution. The dosing of the reagents was stopped when the particles reached a D50 value satisfying Equation 1 described above, i.e., when the D50 reached a value of $D_c = \sqrt[3]{(1 - \varepsilon)} * D' = D_c = \sqrt[3]{(1 - 0.23457)} * 15.2$ $\mu$m$\approx 13.9$ $\mu$m. The total amount of metal in the first MeSO4 solution dosed during S1 was 2.256 kg, and the amount of metal provided in the starting solution was 0.48 kg, so the total amount of metal provided during S1, $\theta_c$, was 2.656 kg.

S2 precipitation of the shell on top of the core particles: The first MeSO4 solution dosed into the reactor during S1 was switched to the second MeSO4 solution, where, at this time with the Ni:Mn:Co molar ratio of 57.7:15.8:26.5. First, the dosing of all reagents, i.e., the second metal salt solution, NaOH solution, and ammonia solution, was restarted and kept the same as during S1, except that the ammonia to metal ratio of the feed was gradually changed so that the 11.7 g/L of ammonia concentration was increased to a value of 12.0 at the end of S2. The dosing of the reagents was stopped when the total amount of metals supplied during S2 reached a value of $\theta_s$ satisfying the equation 2 described above with $\varepsilon$=0.23457 and $\theta_c$=2.656 kg, i.e., when the $\theta_s$ reached a value of $\theta_s = \left(\frac{1}{1-0.23457} - 1\right) * 2.656 \text{ kg} \approx 0.623 \text{ kg}$, corresponding to the dosing of 5.19 L of the second MeSO4 solution. A D50 value of 15.2 $\mu$m was measured after S2.

After S2 the precipitated metal (oxy-)hydroxides were washed and filtered. The wet cake obtained was dried in a furnace at 120°C under nitrogen. The final core-shell precipitated metal (oxy-)hydroxide is labeled EX2. The average metal composition of EX2 from ICP analysis was Ni:Mn:Co=92.3:2.9:4.8 (in mol%), as shown in Table 1. Fig. 3(a) shows a cross-sectional SEM of EX2, and Fig. 3(b-d) shows SEM-EDS images for Co, Mn, and Ni, respectively.

**Example 3:**

A core-shell sample EX3 having a total metal ratio of Ni0.92Mn0.05Co0.03 and a shell-to-core ratio, $\varepsilon$, of 18.1:81.9 (i.e., $\varepsilon\approx0.22100$), and a target median particle size D50 of 13 $\mu$m, i.e., D'=13.0 $\mu$m, was prepared in the following multi-step process:

The precipitation process steps of Example 3 were performed in a continuous stirred tank reactor (CSTR) with a liquid volume of 8.75 L, equipped with a turbine for stirring and a concentrator for withdrawing mother liquor from the reactor. Contrary to two previous examples, S1 consisted of two precipitation steps, where first only NiSO4 solution was provided as metal feed, and then a gradient feed of nickel, manganese and cobalt sulfate was provided. In the gradient feed, the supply of the metal salt solutions was started with NiSO4 solution alone and then continuously and linearly changed to a mixed solution supply in which NiSO4, MnSO4, and CoSO4 solutions were supplied in a molar ratio of 90:6:4 at the end of the gradient feed. The metal salt solutions had a total concentration of 120 g/L metal and were prepared to give a mixed MeSO4 solution, i.e., an aqueous solution containing salts of metals, where Me consists of Ni, Mn, and Co. The mixed MeSO4 solutions were prepared by feeding separate NiSO4, MnSO4, and CoSO4 solutions with respective ratios through a static mixer. A second MeSO4 solution used in S2 had a molar ratio of Ni:Mn:Co of 74:16.5:9.5. During the precipitations, the dosing of each of the three solutions of NiSO4, MnSO4, and CoSO4 was monitored by mass flow meters installed in the NiSO4, MnSO4, and CoSO4 feed lines to determine the total amount of metals delivered. A solution of 220 g/L NaOH and a solution of 210 g/L ammonia were used, and nitrogen gas was supplied to the reactor to prevent oxidation during precipitation. In addition, to increase the solids content during precipitation, a portion of the mother liquor obtained was occasionally withdrawn from the reactor through a filter device located inside the reactor.

S1 precipitation of core particles: A shell-to-core ratio $\varepsilon$ was determined to be 0.22100, which means that the total metal content of sample EX1 is 81.9% from the core portion and 18.1% from the shell portion, respectively. The core portion was prepared by growing the Ni(OH)2 particles from the slurry prepared in step 1b of Example 2. First, the reactor was half filled with DI water, followed by the addition of 300 mL of the Ni(OH)2 slurry from Example 2 (1b) step, diluted to a solids content of 466 g/L. NaOH and ammonia solutions were then added to give a starting solution with 4 g/L ammonia and a pH of 11.7, defined at 20 °C. The temperature of the reactor was adjusted to 85 °C. Then, different reagents, i.e., the NiSO4 solution, the NaOH solution and the ammonia solution, were pumped simultaneously into the reactor at different injection points, maintaining an average residence time of 17 hours, keeping the ammonia-to-metal ratio of the feed at 0.5-0.6 and the pH of the slurry between 11.6-11.8 with the NaOH solution. The dosing of the NiSO4 solution was stopped when the D50 reached a value of 9 $\mu$m and the gradient dosing described above was started. The dosing of the reagents was terminated when the particles reached a D50 value that satisfied Equation 1 described above, i.e., when the D50 reached a value of $D_c = \sqrt[3]{(1-\varepsilon)} * D' = D_c = \sqrt[3]{(1-0.221)} *$ 13 $\mu$m$\approx$12 $\mu$m. The total amount of metal in the first MeSO4 solution delivered during S1 was 2.539 kg from the start to the change to gradient feeding and 3.463 kg during gradient feeding, and the amount of metal delivered in the starting solution was 0.140 kg, and thus the total amount of metal delivered during S1, $\theta$c, was 6.003 kg.

S2 precipitation of the shell on the core particles: The feeding of the first MeSO4 solution was switched to the second MeSO4 solution, at this time with the Ni:Mn:Co molar ratio of 74:16.5:9.5. First, the dosing of all reagents, i.e., the second metal salt solution, NaOH solution, and ammonia solution, was restarted and kept the same as in S1, except that the ammonia to metal ratio of the feed was changed to 0.7-0.8. The dosing of the reagents was stopped when the total amount of metals supplied during S2 reached a value of $\theta$s satisfying Equation 2 described above with $\varepsilon$=0.2210 and $\theta$c=6.003 kg, i.e., when $\theta$s reached a value of $\theta_s = \left(\frac{1}{1-0.221} - 1\right) * 6.003 \text{ kg} \approx 1.703 \text{ kg}$, corresponding to the dosing of 14.19 L of the second MeSO4 solution. A D50 value of 12.7 $\mu$m was measured after S2.

After S2 the precipitated metal (oxy-)hydroxides were washed and filtered. The wet cake obtained was dried in a furnace at 120°C under nitrogen. The final core-shell precipitated metal (oxy-)hydroxide is labeled EX3. The average metal composition of EX3 from ICP analysis was Ni:Mn:Co=92.0:5.0:3.0 (in mol%), as shown in Table 1.

Table 1. Shell-to-core ratio, $\varepsilon$ (i.e., the ratio of the amount of metals in the shell to the amount of metals in the core); targeted core, shell, and overall metal composition ratios (mol%); ICP measured overall metal composition ratios (mol%); and calculated shell thickness ($\mu$m) of the example materials

| Sam ple ID | Shell-to-core ratio $\varepsilon$ | Ni:Mn:Co composition (mol%) | | | | Calculat ed shell thicknes s ($\mu$m) |
|---|---|---|---|---|---|---|
| | | Predetermined/Target | | | Measured (ICP) | |
| | | Core | Shell | Overall | Overall | |
| EX1 | 2/98 | 87.2:4.5:8.3 | 0:4.5:95.5 | 85.5:4.5:10.0 | 85.6:4.4:10.0 | 0.1 |
| EX2 | 19/81 | 100:0:0 | 57.7:15.8:26.5 | 92.0:3.0:5.0 | 92.3:2.9:4.8 | 0.6 |
| EX3 | 18.1/ 81.9 | 100:0:0 | 74.0:16.5:9.5 | 92.0:5.0:3.0 | 92.0:5.0:3.0 | 0.4 |

**Discussion of the results:**

As shown in Table 1, in all Examples 1-3, a predetermined overall/total metal composition for the material is obtained, verified by the ICP analysis, in such a manner that the core and shell portions of the particles have their own predetermined molar ratios of metals obtained by correspondingly varying the metal compositions and amounts of $M_c'$ and $M_s'$ in the first precipitation stage S1 (core portion formation) and in the second precipitation stage S2 (shell portion formation).

**Claims**

**1.** A method for preparing a metal-bearing M'-hydroxide particulate material, the method comprising the steps of:

(a) determining a target value (D') for a median particle diameter D50 of the material to be prepared, preferably the D' being in the range of 3-20 $\mu$m;
(b) combining, during a time period (T1-T2), streams of an aqueous solution ($\beta_c$) containing salts of metals $M_c'$ and an aqueous solution ($\omega$) containing an alkali metal hydroxide in a stirred tank reactor at a pH of 10.5-12.5, determined at 20 °C, thereby increasing the sizes of particles comprising $M_c'$-hydroxide in a slurry thus formed;
(c) continuing step (b) until the D50 of the particles reaches a value of $D_c$, wherein the amount of metals $M_c'$ provided by the flow of solution ($\beta_c$) during the period (T1-T2) is $\theta_c$, wherein $D_c = \sqrt[3]{(1-\varepsilon)} * D'$, wherein $\varepsilon$ is a

predetermined value selected from the range of 0.01-0.9;

(d) providing at least a fraction $S_c$ of the slurry obtained in step (c) either to the same or to a different stirred tank reactor, wherein $0<S_c\leq1$;

(e) combining the fraction $S_c$ of the slurry with streams of an aqueous solution ($\beta_s$) containing salts of metals $M_s'$ and the solution ($\omega$) in the reactor at a pH of 10.5-12.5, determined at 20 °C, thereby forming a layer comprising $M_s'$-hydroxide on the particles comprising $M_c'$-hydroxide of the slurry; and

(f) continuing step (e) until the amount of metals $M_s'$ combined in step (e) reaches a value of $\theta_s$, which

$$\theta_s = \left(\frac{1}{1-\varepsilon} - 1\right) * \theta_c,$$

wherein the $M_c'=Ni_{1-xc-yc-zc}Mn_{xc}Co_{yc}A_{zc}$ with $0\leq xc\leq0.85$, $0\leq yc\leq0.35$, $0\leq zc<0.1$ and $0.15\leq1-xc-yc-zc\leq1$, and wherein the $M_s'=Ni_{1-xs-ys-zs}Mn_{xs}Co_{ys}A_{zs}$ with $0xs0.85$, $0.05\leq ys\leq1$, $0\leq zs<0.1$ and $0\leq1-xs-ys-zs\leq0.95$.

2. The method of claim 1, wherein at least one of the following three holds:

 - $1-xc-yc-zc>1-xs-ys-zs$;
 - $xc\leq0.3$, $yc\leq0.3$ and $1-xc-yc-zc\geq0.60$; and
 - $xs\leq0.35$, $0.3\leq ys\leq1$, $0\leq zs<0.1$ and $0\leq1-xs-ys-zs\leq0.35$.

3. The method of claim 1 or 2, wherein one of the following two holds:

 - $xc\leq0.2$, $yc\leq0.2$ and $1-xc-yc-zc\geq0.6$; or
 - $xc\geq0.55$, $yc\leq0.2$ and $0.2\leq1-xc-yc-zc\leq0.45$.

4. The method of any of the preceding claims, wherein one or more of the following holds: $xc\neq xs$, $yc\neq ys$, and $zc\neq zs$.

5. The method of any of the preceding claims, wherein $1-xs-ys-zs=0$.

6. The method of any of the preceding claims, wherein the $\varepsilon$ being at most 0.8 or 0.7 or 0.6 or 0.5 or 0.4.

7. The method of any of the preceding claims, wherein at the beginning of step (b), preferably before T1, a starting slurry is provided to the stirred tank reactor, the starting slurry comprising particles comprising metal $M_k'$-bearing hydroxide, wherein $M_k'=Ni_{1-xk-yk-zk}Mn_{xk}Co_{yk}A_{zk}$ with $0\leq xk\leq0.85$, $0\leq yk\leq0.35$, $0\leq zk<0.1$ and $0.25\leq1-xk-yk-zk\leq1$.

8. The method of claim 7, wherein $1-xk-yk-zk=1$ or $M_k'= M_c'$.

9. The method of claim 7 or 8, wherein the D50 of the particles of the starting slurry has a value $D_k$ which is less than $D_c$, preferably $D_k$ is in the range of 0.7-10 $\mu$m, more preferably $D_k$ is in the range of 1.0-6 $\mu$m.

10. The method of any of claims 7-9, wherein the $\theta_c$ is a sum of the amounts of metals $M_c'$, combined in step (b), and the amount of metals Mk', provided in the starting slurry.

11. The method of any of the preceding claims, wherein each of $A_{zc}$, $A_{zs}$ or $A_{zk}$ is either one or more of Ba, Ca, Ce, Cr, La, Mg, Mo, Nb, Sr, Ti, Y, V, W, Zn, and Al.

12. The method of any of the preceding claims, wherein at least one of the following two holds:

 - in step (b) a stream of an aqueous solution ($\lambda$) containing complexing agent is combined with the streams of the aqueous solution ($\beta_c$) and the aqueous solution ($\omega$); or
 - in step (e) a stream of an aqueous solution ($\lambda$) containing complexing agent is combined with the streams of the aqueous solution ($\beta_s$) and the aqueous solution ($\omega$).

13. The method of claim 12, wherein the molar ratio of the complexing agent to metals $M_c'$ in step (b) is between a range of 0.1-1.0, and wherein the molar ratio of the complexing agent to metals $M_s'$ in step (e) is between a range of 0.1-1.0.

14. The method of claim 13, wherein the molar ratio of the complexing agent to metals $M_s'$ in step (e) is at least 0.05 higher than the molar ratio of the complexing agent to metals $M_c$' in step (b).

15. The method of any one of claims 12-14, wherein the complexing agent is ammonia and/or a compound capable of acting as an ammonium ion donor.

## FIG. 1

100

(a) Determining of a target D50 of the particulate material (D') to be prepared

(b) Combining of core raw material aqueous solutions
and
Maintaining the precipitation conditions

(c) Providing growth of the core portion until Equation (1) is satisfied

S1 - - - - - - - - - - - - - - - - - - - - - - - -

(d) Providing a fraction Sc of the slurry prepared in S1, which $0 < Sc \leq 1$

(e) Maintaining the precipitation conditions
and
Combining of shell raw material aqueous solutions

(f) Providing growth of the shell portion until Equation 2 is satisfied

S2 - - - - - - - - - - - - - - - - - - - - - - - -

FIG. 2

FIG. 3

FIG. 4

## EUROPEAN SEARCH REPORT

**Application Number**

EP 24 18 2323

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 757 065 A1 (SUMITOMO METAL MINING CO [JP]) 30 December 2020 (2020-12-30) * paragraph [[0057]] - paragraph [[0072]]; figure 1 * | 1-15 | INV. C01G53/04 |
| X | WO 2024/033132 A1 (BASF SE [DE]) 15 February 2024 (2024-02-15) | 1 | |
| Y | * Examples, 1.2 to 1.4; claim 3 * | 1-15 | |
| X | WO 2021/244963 A1 (BASF SE [DE]) 9 December 2021 (2021-12-09) | 1 | |
| Y | * claims 1-12 * | 1-15 | |
| X | WO 2023/135055 A1 (BASF SE [DE]) 20 July 2023 (2023-07-20) | 1 | |
| Y | * 1.1 Synthesis of an inventive precursor P-CAM.1 * | 1-15 | |
| X | EP 3 533 764 A1 (SUMITOMO METAL MINING CO [JP]) 4 September 2019 (2019-09-04) | 1 | TECHNICAL FIELDS SEARCHED (IPC) |
| Y | * example 1 * | 1-15 | C01G |

The present search report has been drawn up for all claims

| Place of search | Date of completion of the search | Examiner |
|---|---|---|
| Munich | 20 December 2024 | Timmermans, Michel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 2323

This annex lists the patent family members relating to the patent documents cited in  the above-mentioned European search report.
The members are as contained in the European Patent Office EDP file on
The European Patent Office is in no way liable for these particulars which are merely given for the purpose of information.

20-12-2024

| Patent document cited in search report | | Publication date | Patent family member(s) | | Publication date |
|---|---|---|---|---|---|
| EP 3757065 | A1 | 30-12-2020 | CN | 111770896 A | 13-10-2020 |
| | | | EP | 3757065 A1 | 30-12-2020 |
| | | | JP | 7245422 B2 | 24-03-2023 |
| | | | JP | WO2019163845 A1 | 18-02-2021 |
| | | | US | 2021384490 A1 | 09-12-2021 |
| | | | WO | 2019163845 A1 | 29-08-2019 |
| WO 2024033132 | A1 | 15-02-2024 | NONE | | |
| WO 2021244963 | A1 | 09-12-2021 | CA | 3180385 A1 | 09-12-2021 |
| | | | CN | 115515905 A | 23-12-2022 |
| | | | EP | 4161877 A1 | 12-04-2023 |
| | | | JP | 2023532185 A | 27-07-2023 |
| | | | KR | 20230019838 A | 09-02-2023 |
| | | | US | 2023212028 A1 | 06-07-2023 |
| | | | WO | 2021244963 A1 | 09-12-2021 |
| WO 2023135055 | A1 | 20-07-2023 | CN | 118575307 A | 30-08-2024 |
| | | | EP | 4466741 A1 | 27-11-2024 |
| | | | KR | 20240134893 A | 10-09-2024 |
| | | | WO | 2023135055 A1 | 20-07-2023 |
| EP 3533764 | A1 | 04-09-2019 | CN | 110121481 A | 13-08-2019 |
| | | | CN | 114804226 A | 29-07-2022 |
| | | | EP | 3533764 A1 | 04-09-2019 |
| | | | JP | 6855752 B2 | 07-04-2021 |
| | | | JP | 2018070419 A | 10-05-2018 |
| | | | KR | 20190078603 A | 04-07-2019 |
| | | | US | 2020052295 A1 | 13-02-2020 |
| | | | WO | 2018079809 A1 | 03-05-2018 |

EPO FORM P0459

For more details about this annex : see Official Journal of the European Patent Office, No. 12/82